# FASCICULE DE BREVET EUROPEEN

(11) **EP 3 055 047 B1**
(45) Date de publication et mention de la délivrance du brevet: **15.11.2017**
(21) Numéro de dépôt: 14796170.0
(22) Date de dépôt: 15.09.2014
(51) Int. Cl.: B01D 53/22, B01D 63/02

(54) **DISPOSITIF DE SÉPARATION D'AIR, DISPOSITIF D'INERTAGE ET AÉRONEF COMPRENANT UN TEL DISPOSITIF**
LUFTTRENNVORRICHTUNG, INERTISIERUNGSVORRICHTUNG UND FLUGZEUG MIT DERARTIGER VORRICHTUNG
AIR-SEPARATION DEVICE, INERTING DEVICE AND AIRCRAFT COMPRISING SUCH A DEVICE

(30) Priorité: 09.10.2013 FR 1359769
(43) Date de publication de la demande: 17.08.2016
(73) Titulaire: L'Air Liquide Société Anonyme pour l'Etude et l'Exploitation des Procédés Georges Claude, 75007 Paris (FR)
(72) Inventeur: ROUSSIN-BOUCHARD, Xavier, F-38112 Meaudre (FR); CAILLAUD, Aurélie, F-38500 Voiron (FR); GIANESE, Pierre, F-38660 Le Touvet (FR); DUMONT, Elodie, F-38210 Vourey (FR); DEJONGHE, Jean-Marc, F-26400 Allex (FR)
(74) Mandataire: De Cuenca, Emmanuel Jaime
(86) Numéro de dépôt international: PCT/FR2014/052285
(87) Numéro de publication internationale: WO 2015/052392

(56) Documents cités:
- EP-A2- 1 810 740
- WO-A1-03/014025
- US-A- 3 615 016
- US-A- 5 484 528
- US-A1- 2002 158 167
- US-A1- 2010 326 278

## Description

La présente invention concerne un dispositif de séparation d'air ainsi qu'un dispositif d'inertage et un aéronef comprenant un tel dispositif.

L'invention concerne plus particulièrement un dispositif de séparation d'air comportant un boîtier de forme générale cylindrique abritant un élément de filtration comprenant un faisceau de fibres oblongues creuses formant une membrane, l'axe longitudinal des fibres étant parallèle à l'axe longitudinal du boîtier cylindrique, le boîtier comprenant, à une première extrémité, un orifice d'entrée d'air et, à une seconde extrémité, un orifice de sortie de gaz purifié, le dispositif comprenant un organe de maintien du faisceau de fibres dans le boîtier.

La filtration des gaz de l'air par membrane à fibres creuses est un procédé largement utilisé dans l'industrie et en particulier dans le domaine aéronautique. Cette technologie consiste à prélever de l'air en provenance de compresseur(s) ou de moteur(s) et à le faire circuler dans un système de séparation contenant une membrane poreuse sélective ne laissant "traverser" que les molécules d'une espèce chimique (oxygène par exemple). En compartimentant ce système de façon étanche il est possible de récupérer en sortie d'une part de l'air appauvri en oxygène et donc très riche en azote, et d'autre part, de l'air enrichi en oxygène. L'air enrichi en azote peut être utilisé pour inerter des réservoirs de carburant par exemple tandis que l'air enrichi en oxygène pourra être simplement rejeté à l'atmosphère.

Les systèmes de séparation de l'air comprennent généralement un boîtier comprenant un cylindre métallique (appelé enveloppe), fermé à une extrémité par un fond (soudé, collé ou vissé) et fermé à l'autre extrémité par un couvercle (généralement vissé ou assemblé par une bride). Le couvercle est percé d'un orifice d'entrée permettant l'admission d'air alors que le fond est percé d'un orifice de sortie permettant la collecte du gaz enrichi en azote en sortie de système. Un autre orifice est prévu pour le gaz séparé (oxygène). L'enveloppe cylindrique peut par exemple être munie d'un orifice perpendiculaire à l'axe du cylindre permettant l'évacuation de l'oxygène filtré par le système.

La géométrie des orifices d'entrée et de sortie peuvent être de nature et de géométries différentes.

L'élément de filtration disposé à l'intérieur du boîtier est généralement constitué d'un faisceau de fibres polymère creuses présentes en très grand nombre. L'axe longitudinal des fibres est aligné avec l'axe longitudinal du cylindre du boîtier.

Aux extrémités de ces fibres on peut prévoir un matériau thermodurcissable, idéalement de l'époxy, coulé et ré-usiné. Ces extrémités de matériau rigide permettent un maintien mécanique des fibres et une coopération avec un système de joint(s) torique(s) pour maintenir l'étanchéité entre les différentes chambres du système.

Le document US7717983B2 décrit un organe de maintien axial du faisceau constitué de cônes venant se centrer de chaque côté dans des cylindres creux présents de chaque côté des faces extérieure des membranes.

Cependant, ce montage génère une rigidité de l'ensemble du dispositif et provoque des contraintes néfastes dans les membranes lors de certaines phases de fonctionnement du système.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que l'organe de maintien comprend au moins un organe ressort disposé à l'intérieur du boîtier, ledit organe ressort étant contraint entre une butée formée par le boîtier et une extrémité longitudinale du faisceau de fibres, pour assurer le maintien longitudinal du faisceau de fibres tout en permettant sa dilatation ou sa contraction.

Un tel dispositif permet un assemblage et un maintien simple du faisceau de membranes.

De plus, selon cet arrangement, les dilatations et rétractations des membranes sont autorisées pendant les phases de fonctionnement et de stockage du système (température variant par exemple entre -50°C et 70°C).

Par ailleurs, des modes de réalisation de l'invention peuvent comporter l'une ou plusieurs des caractéristiques suivantes :
- l'organe de maintien comprend au moins un ressort tel qu'une une rondelle élastique,
- l'organe de maintien comprend une rondelle élastique de type rondelle ondulée,
- l'organe de maintien comprend plusieurs rondelles élastiques,
- l'organe de maintien comprend plusieurs rondelles (6) élastiques empilées d'un même côté du boîtier entre une butée formée par le boîtier et une extrémité longitudinale du faisceau de fibres,
- l'organe de maintien comprend plusieurs rondelles élastiques dont deux rondelles sont disposées respectivement au niveau de deux extrémités du boîtier, c'est-à-dire qu'au moins une première rondelle élastique est disposée entre une première butée formée par le boîtier et une première extrémité longitudinale du faisceau de fibres tandis qu'au moins une seconde rondelle élastique est disposée entre une seconde butée formée par le boîtier et une seconde extrémité longitudinale du faisceau de fibres,
- l'organe de maintien comprend une rondelle d'appui plane associée à la au moins une rondelle élastique, ladite rondelle d'appui plane étant disposée entre une rondelle élastique et une extrémité du faisceau de fibres, c'est-à-dire que la rondelle d'appui est en contact avec une extrémité du faisceau de fibres,
- la au moins une rondelle élastique est en contact avec une rondelle d'appui plane,
- le boîtier comprend deux extrémités assemblées l'une à l'autre et formant respectivement un fond et un couvercle du boîtier,
- le dispositif comporte une chemise centrale cylindrique disposée dans le boîtier autour du faisceau de fibres.

De plus, lorsque les extrémités des membranes sont solidaires d'extrémités rigides (époxy ou autre), un tel arrangement limite les efforts de cisaillement sur ces extrémités rigides (époxy seul et fibres noyées dans l'époxy).

L'invention concerne également un dispositif d'inertage pour réservoir d'aéronef comprenant un dispositif de séparation conforme à l'une quelconque des caractéristiques ci-dessus ou ci-dessous dans lequel le faisceau de fibres creuse est du type à adsorption sélective de l'oxygène.

L'invention concerne également un aéronef comprenant un tel dispositif d'inertage.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en coupe, schématique et partielle, illustrant un premier exemple de réalisation d'un dispositif de séparation selon l'invention,
- la figure 2 illustre une vue de face et en demi-coupe, d'un exemple d'organe élastique ou ressort pouvant être utilisée dans le dispositif de séparation selon l'invention
- la figure 3 représente une vue en coupe, schématique et partielle, d'une extrémité d'un dispositif de séparation selon un autre exemple de réalisation l'invention,
- la figure 4 représente une vue en perspective d'une coupe, d'un exemple d'organe de maintien du dispositif de la figure 3.

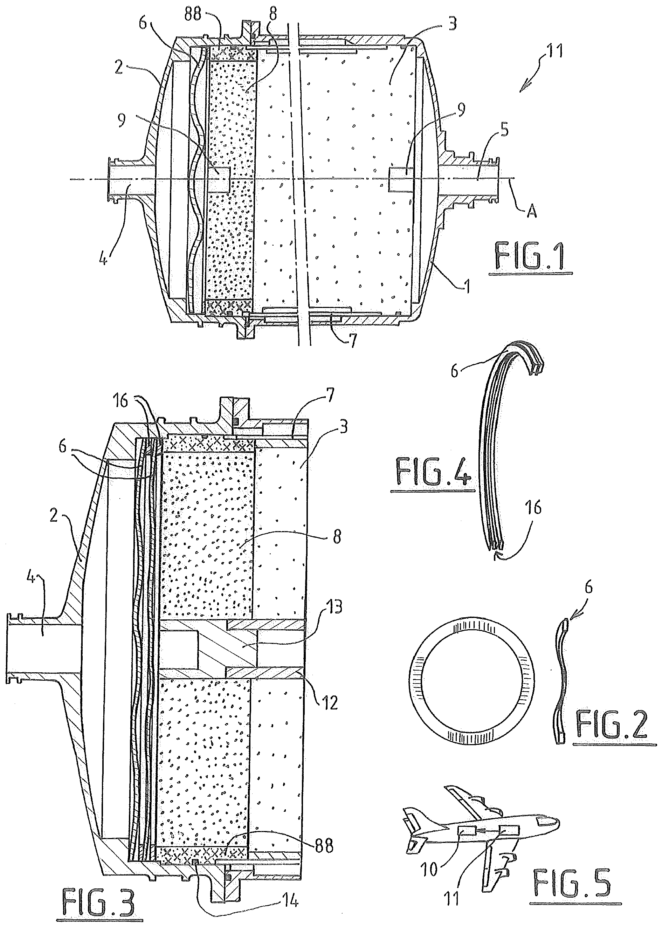

Le dispositif de séparation d'air représenté à la figure 1 comprend un boîtier 1, 2 de forme générale cylindrique abritant un élément de filtration comprenant un faisceau 3 fibres oblongues creuses formant une membrane. Par exemple, ces membranes sont celles commercialisées par la société « MEDAL ».

Comme illustré à la figure 1, le boîtier peut être formé par deux extrémités 1, 2 assemblées l'une à l'autre et formant respectivement un fond et un couvercle du boîtier cylindrique.

L'une ou les deux extrémités 1, 2 peuvent délimiter la partie centrale cylindrique du boîtier. De plus, une âme 7 centrale cylindrique (par exemple métallique) peut être prévue. Cette âme 7 cylindrique centrale peut être reliée à l'une au moins des deux extrémités 1, 2. L'axe longitudinal central du cylindre est représenté à la figure 1.

L'axe longitudinal du faisceau 3 de fibres est parallèle à l'axe longitudinal du boîtier 1, 2 cylindrique (c'est-à-dire parallèle aux génératrices de la partie cylindrique). Classiquement, le boîtier 1, 2 comprend, à une première extrémité, un orifice 4 d'entrée d'air et, à une seconde extrémité, un orifice 5 de sortie de gaz purifié (enrichi en azote). Par soucis de simplification, l'orifice d'évacuation du gaz filtré (oxygène) n'est pas représenté aux figures.

Selon une particularité avantageuse, le dispositif comprend un organe de maintien longitudinal du faisceau 3 de fibres dans le boîtier 1, 2 constitué d'un ressort tel qu'une rondelle 6 élastique. La rondelle 6 élastique est disposée à l'intérieur du boîtier 1, 2 et est contrainte entre une butée 12 formée par le boîtier 1, 2 et une extrémité du faisceau 3 de fibres. De cette façon, la rondelle 6 assure un maintien axial élastique du faisceau 3 de fibres dans le boîtier 1, 2. C'est-à-dire que la rondelle 6 élastique permet une dilatation ou une contraction du faisceau 3 de fibres dans le boîtier (en fonction notamment de la température d'utilisation. Le diamètre extérieur de la rondelle 6 élastique correspond de préférence au diamètre interne du boîtier 1, 2).

La rondelle 6 élastique permet ainsi de reprendre les efforts de compression axiale tout en laissant librement le cylindre de fibres se dilater et se contracter longitudinalement en fonction de l'évolution de la température.

La rondelle 6 élastique est de préférence une rondelle élastique ondulée telle que représenté à la figure 2. Une face de l'anneau formé par la rondelle 6 élastique est en appui dans le boîtier (ou un élément fixe dans le boîtier) tandis que l'autre face de la rondelle 6 est en appui sur une extrémité du faisceau 3 de fibres.

Bien entendu, tout autre type d'organe élastique tel que rondelle ou ressort peut être envisagé, par exemple un ressort de compression (métallique ou autre) formant de plusieurs lobes ondulés selon une coupe transversale. Par exemple, l'organe ressort peut comprendre une rondelle ondulée commercialisée par la société BORELLY et notamment une rondelle désignée par la marque ONDULFIL®.

Dans le cas où l'extrémité du faisceau 3 de fibre est noyée dans un matériau thermodurcissable rigide, la rondelle 6 élastique transmets des efforts aux fibres sans provoquer de cisaillement de cette partie rigide.

De plus, la rondelle 6 élastique n'affecte pas la surface d'échange des gaz entre le faisceau 3 de fibres et le reste du cylindre.

Les extrémités longitudinales opposées du faisceau 3 de fibres peuvent comporter chacune une zone en creux prévue pour le centrage (ces zones en creux sont facultatives et inutilisées dans cet exemple).

La rondelle 6 peut être utilisée seule (comme illustré à la figure 1) ou peut être associée à une rondelle 16 d'appui plane (non ondulée donc non élastique). Par exemple la rondelle 16 d'appui plane peut être disposée au contact du faisceau 3 de fibres tandis que la rondelle 6 ondulée est disposée entre une butée du boîtier 1, 2 et la rondelle 16 d'appui plane.

La rondelle 16 d'appui permet de mieux répartir l'effort appliqué au faisceau 3 de fibres que la rondelle 6 ondulée (contrairement à une rondelle 16 plane, une rondelle 6 élastique n'est en contact avec le faisceau 3 de fibres que de façon discontinue).

Dans une variante possible, une rondelle 6 élastique (seule ou associée à une rondelle 16 d'appui) peut être disposée de la même façon également à l'autre extrémité du faisceau 3 de fibres. C'est-à-dire que le maintien élastique est formé de part et d'autre du faisceau 3 de fibres.

De plus, comme illustré à la figure 4, l'organe de maintien peut être constitué de plusieurs rondelles 6 élastiques empilées (par exemple deux ou trois rondelles ou plus).

Le nombre de rondelle 6 élastique utilisées pourra être choisi en fonction du taux de dilatation du faisceau 3 de fibres et de la précision d'usinage des différentes pièces.

Ainsi, si plusieurs rondelles 6 élastiques sont nécessaires, leur positionnement peut se faire du même côté du faisceau 3 afin de pousser le faisceau 3 de fibres au fond du boîtier 1, 2. Dans ce cas, la variation de dimension lors de la dilatation de la membrane sera intégralement réalisée du côté où les rondelles 6 élastiques sont présentes (avec diminution du volume de la chambre. Cette variation de volume sera au contraire répartie également de chaque côté du faisceau 3 lorsque des rondelles 6 élastique sont prévues de chaque côté du faisceau 3 de fibres.

Le positionnement des rondelles 6 élastiques peut être prévu entièrement du côté du couvercle 2, c'est-à-dire du côté de l'entrée. La pression étant généralement supérieure de côté de l'entrée de gaz, cette disposition présente l'avantage de ne faire travailleur le ressort ou les rondelles que pour compenser les variations dimensionnelles dues aux dilatations ou contraction thermiques.

La figure 3 illustre un dispositif de séparation dans lequel l'organe de maintien comprend, à une extrémité du faisceau 3 de fibres, deux paires de rondelles empilées, chaque paire de rondelle comprenant une rondelle 6 élastique et une rondelle 16 de maintien plane. La rondelle 16 d'appui de l'une des paires de rondelles 6, 16 est en appui sur l'extrémité du faisceau 3 de fibres (sur l'extrémité imprégnée du matériau rigide (représenté moucheté de points à la figure 3). Comme illustré à la figure 3, la périphérie du faisceau 3 de fibres imprégnée du matériau rigide 8 peut comporter une couche 88 extérieure de matériau rigide « pur » (c'est-à-dire sans les fibres de la membrane). Cette couche 88 de matériau rigide pur peut être prévue pour accueillir au moins un joint 14 d'étanchéité avec le boîtier 1, 2 (par exemple un joint torique). De plus, afin de ne pas obstruer une partie de la surface active, la ou les rondelles 6, 16 prennent appui de préférence sur cette couche 88 de matériau rigide pur (et non pas sur la couche de matériau rigide mêlée aux fibres).

Dans l'exemple non limitatif représenté à la figure 3 le faisceau 6 de fibres comprend un tube 12 central (par exemple en aluminium) dont l'extrémité est refermée par un bouchon 13 (par exemple vissé dans le tube 12).

La ou les solutions décrites ci-dessus permettent un usinage symétrique des parties rigides du dispositif et donc un montage indifférencié dans un sens où dans l'autre. De plus, le nombre de pièces entrant en jeu dans le montage est relativement limité et permet un système fiable.

De plus, les solutions décrites permettent à l'ensemble des fibres (membrane) de se dilater et de se contracter librement en limitant ou réduisant le bras de levier appliqué aux extrémités en époxy de la membrane par rapport aux solutions où l'effort de maintien est appliqué en partie centrale.

Comme illustré à la figure 5, le dispositif 11 peut être utilisé dans un système d'inertage (« OBBIGS ») du réservoir 10 d'un aéronef.

## Revendications

1. Dispositif d'inertage pour réservoir (10) d'aéronef comprenant un dispositif (11) de séparation d'air comportant un boîtier (1, 2) de forme générale cylindrique abritant un élément de filtration comprenant un faisceau (3) de fibres oblongues creuses à adsorption sélective de l'oxygène formant une membrane, l'axe longitudinal des fibres étant parallèle à l'axe longitudinal (A) du boîtier (1, 2) cylindrique, le boîtier (1, 2) comprenant, à une première extrémité, un orifice (4) d'entrée d'air et, à une seconde extrémité, un orifice (5) de sortie de gaz purifié, le dispositif comprenant un organe de maintien du faisceau (3) de fibres dans le boîtier (1, 2), **caractérisé en ce que** l'organe de maintien comprend au moins un organe (6) ressort disposé à l'intérieur du boîtier (1, 2), ledit organe (6) ressort étant contraint entre une butée formée par le boîtier (1, 2) et une extrémité longitudinale du faisceau (3) de fibres, pour assurer le maintien longitudinal du faisceau (3) de fibres tout en permettant sa dilatation ou sa contraction, et **en ce que** le faisceau (3) de fibres comprend une couche (8) rigide de matériau rigide tel qu'un thermodurcissable à l'une au moins de ses extrémités et **en ce que** l'organe de maintien est en appui sur ladite couche (8) rigide.

2. Dispositif selon la revendication 1, **caractérisé en ce que** l'organe de maintien comprend au moins un ressort tel qu'une une rondelle (6) élastique.

3. Dispositif selon la revendication 1 ou 2, **caractérisé en ce que** l'organe de maintien comprend une rondelle (6) élastique de type rondelle ondulée.

4. Dispositif selon l'une quelconque des revendications 1 à 3, **caractérisé en ce que** l'organe de maintien comprend plusieurs rondelles (6) élastiques.

5. Dispositif selon l'une quelconque des revendications 1 à 4, **caractérisé en ce que** l'organe de maintien comprend plusieurs rondelles (6) élastiques empilées d'un même côté du boîtier (1, 2) entre une butée formée par le boîtier (1, 2) et une extrémité longitudinale du faisceau (3) de fibres.

6. Dispositif selon l'une quelconque des revendications 1 à 5, **caractérisé en ce que** l'organe de maintien comprend plusieurs rondelles (6) élastiques dont deux rondelles (6) sont disposées respectivement au niveau de deux extrémités du boîtier (1, 2), c'est-à-dire qu'au moins une première rondelle (6) élastique est disposée entre une première butée formée par le boîtier (1, 2) et une première extrémité longitudinale du faisceau (3) de fibres tandis qu'au moins une seconde rondelle (6) élastique est disposée entre une seconde butée formée par le boîtier (1, 2) et une seconde extrémité longitudinale du faisceau (3) de fibres.

7. Dispositif selon l'une quelconque des revendications 1 à 6, **caractérisé en ce que** l'organe de maintien comprend une rondelle (16) d'appui plane associée à la au moins une rondelle (6) élastique, ladite rondelle (16) d'appui plane étant disposée entre une rondelle (6) élastique et une extrémité du faisceau (3) de fibres, c'est-à-dire que la rondelle (16) d'appui est en contact avec une extrémité du faisceau (3) de fibres.

8. Dispositif selon la revendication 7, **caractérisé en ce que** la au moins une rondelle (6) élastique est en contact avec une rondelle (16) d'appui plane.

9. Dispositif selon l'une quelconque des revendications 1 à 8, **caractérisé en ce que** le boîtier comprend deux extrémités (1, 2) assemblées l'une à l'autre et formant respectivement un fond et un couvercle du boîtier (1, 2).

10. Dispositif selon la revendication 9, **caractérisé en ce qu'**il comporte une chemise (10) centrale cylindrique disposée dans le boîtier (1, 2) autour du faisceau (3) de fibres.

11. Aéronef comprenant un dispositif d'inertage selon l'une quelconque des revendications 1 à 10.

## Patentansprüche

1. Vorrichtung zur Inertisierung für einen Tank (10) eines Luftfahrzeugs, eine Vorrichtung (11) zum Trennen von Luft umfassend, die ein Gehäuse (1, 2) in einer allgemeinen zylindrischen Form enthält, welches ein Filterelement aufnimmt, ein Bündel (3) an länglichen Hohlfasern zur selektiven Adsorption des Sauerstoffs umfassend, die eine Membran bilden, wobei die Längsachse der Fasern parallel zur Längsachse (A) des zylindrischen Gehäuses (1, 2) liegt, wobei das Gehäuse (1, 2) an einem ersten Ende eine Eintrittsöffnung für Luft (4) und an einem zweiten Ende eine Austrittsöffnung (5) für gereinigtes Gas umfasst, wobei die Vorrichtung ein Organ zum Festhalten des Bündels (3) an Fasern in dem Gehäuse (1, 2) umfasst, **dadurch gekennzeichnet, dass** das Organ zum Festhalten zumindest ein Federorgan (6) umfasst, das im Inneren des Gehäuses (1, 2) angeordnet ist, wobei das Federorgan (6) zwischen einem Anschlag, der durch das Gehäuse (1, 2) gebildet wird, und einem Längsende des Bündels (3) an Fasern eingeschlossen ist, um für den Längshalt des Bündels (3) an Fasern zu sorgen, und gleichzeitig dessen Ausdehnen oder dessen Zusammenziehen zu ermöglichen und dadurch, dass das Bündel (3) an Fasern an zumindest einem seiner Enden eine starre Schicht (8) aus einem starren Material, wie einem hitzehärtbaren Material umfasst, und dadurch, dass das Organ zum Festhalten an der starren Schicht (8) anliegt.

2. Vorrichtung nach Anspruch 1, **dadurch gekennzeichnet, dass** das Organ zum Festhalten zumindest eine Feder, wie eine Federscheibe (6) umfasst.

3. Vorrichtung nach Anspruch 1 oder 2, **dadurch gekennzeichnet, dass** das Organ zum Festhalten eine Federscheibe (6) in der Art einer Wellenscheibe umfasst.

4. Vorrichtung nach einem der Ansprüche 1 bis 3, **dadurch gekennzeichnet, dass** das Organ zum Festhalten mehrere Federscheiben (6) umfasst.

5. Vorrichtung nach einem der Ansprüche 1 bis 4, **dadurch gekennzeichnet, dass** das Organ zum Festhalten mehrere Federscheiben (6) umfasst, die auf einer selben Seite des Gehäuses (1, 2) zwischen einem Anschlag, der durch das Gehäuse (1, 2) gebildet wird, und einem Längsende des Bündels (3) an Fasern übereinandergestapelt sind.

6. Vorrichtung nach einem der Ansprüche 1 bis 5, **dadurch gekennzeichnet, dass** das Organ zum Festhalten mehrere Federscheiben (6) umfasst, von denen zwei Scheiben (6) jeweils im Bereich von zwei Enden des Gehäuses (1, 2) angeordnet sind, das heißt, dass zumindest eine erste Federscheibe (6) zwischen einem ersten Anschlag, der durch das Gehäuse (1, 2) gebildet wird, und einem ersten Längsende des Bündels (3) an Fasern angeordnet ist, während zumindest eine zweite Federscheibe (6) zwischen einem zweiten Anschlag, der durch das Gehäuse (1, 2) gebildet wird, und einem zweiten Längsende des Bündels (3) an Fasern angeordnet ist.

7. Vorrichtung nach einem der Ansprüche 1 bis 6, **dadurch gekennzeichnet, dass** das Organ zum Festhalten eine ebene Unterlegscheibe (16) umfasst, die der zumindest einen Federscheibe (6) zugeordnet ist, wobei die ebene Unterlegscheibe (16) zwischen einer Federscheibe (6) und einem Ende des Bündels (3) an Fasern angeordnet ist, das heißt, dass die Unterlegscheibe (16) in Kontakt mit einem Ende des Bündels (3) an Fasern ist.

8. Vorrichtung nach Anspruch 7, **dadurch gekennzeichnet, dass** zumindest eine Federscheibe (6) in Kontakt mit einer ebenen Unterlegscheibe (16) ist.

9. Vorrichtung nach einem der Ansprüche 1 bis 8, **dadurch gekennzeichnet, dass** das Gehäuse zwei Enden (1, 2) umfasst, die miteinander zusammengesetzt sind, und jeweils einen Boden und einen Deckel des Gehäuses (1, 2) bilden.

10. Vorrichtung nach Anspruch 9, **dadurch gekennzeichnet, dass** sie eine zentrale zylindrische Laufbuchse (10) umfasst, die in dem Gehäuse um das Bündel (3) an Fasern herum angeordnet ist.

11. Luftfahrzeug, eine Vorrichtung zur Inertisierung nach einem der Ansprüche 1 bis 10 umfassend.

## Claims

1. Inerting device for an aircraft tank (10) comprising an air-separation device (11) having a roughly cylindrically shaped housing (1, 2) containing a filtration element comprising a cluster (3) of hollow oblong fibres for selective oxygen adsorption forming a membrane, the longitudinal axis of the fibres being parallel to the longitudinal axis (A) of the cylindrical housing (1, 2), the housing (1, 2) comprising, at a first end, an air-inlet orifice (4) and, at a second end, a purified-gas outlet orifice (5), the device comprising a member for holding the cluster (3) of fibres in the housing (1, 2), **characterised in that** the holding member comprises at least one spring member (6) disposed inside the housing (1, 2), said spring member (6) being constrained between a stop formed by the housing (1, 2) and a longitudinal end of the cluster (3) of fibres, in order to provide the longitudinal holding of the cluster (3) of fibres while allowing expansion or contraction thereof, and **in that** the cluster (3) of fibres comprises a rigid layer (8) of rigid material such as a thermosetting material at at least one of the ends thereof and **in that** the holding member is in abutment on said rigid layer (8).

2. Device according to claim 1, **characterised in that** the holding member comprises at least one spring such as an elastic washer (6).

3. Device according to claim 1 or claim 2, **characterised in that** the holding member comprises an elastic washer (6) of the corrugated washer type.

4. Device according to any of claims 1 to 3, **characterised in that** the holding member comprises a plurality of elastic washers (6).

5. Device according to any of claims 1 to 4, **characterised in that** the holding member comprises a plurality of elastic washers (6) stacked on the same side of the housing (1, 2) between a stop formed by the housing (1, 2) and a longitudinal end of the cluster (3) of fibres.

6. Device according to any of claims 1 to 5, **characterised in that** the holding member comprises a plurality of elastic washers (6), two washers (6) of which are disposed respectively at two ends of the housing (1, 2), that is to say at least one first elastic washer (6) is disposed between a first stop formed by the housing (1, 2) and a first longitudinal end of the cluster (3) of fibres while at least one second elastic washer (6) is disposed between a second stop formed by the housing (1, 2) and a second longitudinal end of the cluster (3) of fibres.

7. Device according to any of claims 1 to 6, **characterised in that** the holding member comprises a flat support washer (16) associated with the at least one elastic washer (6), said flat support washer (16) being disposed between an elastic washer (6) and an end of the cluster (3) of fibres, that is to say the support washer (16) is in contact with an end of the cluster (3) of fibres.

8. Device according to claim 7, **characterised in that** the at least one elastic washer (6) is in contact with a flat support washer (16).

9. Device according to any of claims 1 to 8, **characterised in that** the housing comprises two ends (1, 2) connected to each other and forming respectively a bottom and a cover of the housing (1, 2).

10. Device according to claim 9, **characterised in that** it comprises a cylindrical central jacket (10) disposed in the housing (1, 2) around the cluster (3) of fibres.

11. Aircraft comprising an inerting device according to any of claims 1 to 10.
